# EUROPÄISCHE PATENTSCHRIFT

(11) **EP 1 631 470 B1**
(45) Veröffentlichungstag und Bekanntmachung des Hinweises auf die Patenterteilung: **23.08.2006**
(21) Anmeldenummer: 04739466.3
(22) Anmeldetag: 29.05.2004
(51) Int. Cl.: B60K 17/04, B60T 1/06, F16D 55/40

(54) **ANTRIEB FÜR EIN MOBIL-FAHRZEUG**
DRIVE MECHANISM FOR A MOBILE VEHICLE
ENTRAINEMENT POUR UN ENGIN MOBILE

(30) Priorität: 06.06.2003 DE 10326143
(43) Veröffentlichungstag der Anmeldung: 08.03.2006
(73) Patentinhaber: ZF FRIEDRICHSHAFEN AG, 88038 Friedrichshafen (DE)
(72) Erfinder: OBERSTARR, Johann, Gerhard, 94032 Passau (DE)
(86) Internationale Anmeldenummer: PCT/EP2004/005854
(87) Internationale Veröffentlichungsnummer: WO 2004/108460

(56) Entgegenhaltungen:
- EP-B- 0 979 365
- DE-A- 2 049 630
- DE-A- 3 905 292
- DE-A- 4 433 100
- DE-A- 19 523 543
- FR-A- 2 322 757
- GB-A- 2 075 622
- US-A- 4 424 874
- US-A- 4 442 914

## Beschreibung

Die Erfindung bezieht sich auf einen Antrieb für ein Mobil-Fahrzeug nach der im Oberbegriff von Anspruch 1 näher definierten Art.

Gattungsgemäße Antriebe werden zum Antrieb von Fahrzeugrädern, insbesondere für Arbeitsmaschinen, wie beispielsweise Radbagger oder Radlader, verwendet. Hierbei ist es einerseits von Bedeutung, das Fahrzeugrad direkt zu bremsen, um im gebremsten Zustand ein zusätzliches Bewegen des Fahrzeugrades durch das Verzahnungsspiel einer, einer Betriebsbremse nachgeschalteten Untersetzungsgetriebestufe auszuschalten, und andererseits von Bedeutung, diese Bremse vor Verschmutzung zu schützen. Ebenso ist es von Bedeutung, die Radlager, über welche die Fahrzeugräder gelagert sind, so auszugestalten, dass eine ausreichende Lebensdauer auch bei den hohen Fahrzeuggewichten der Arbeitsmaschinen erreicht werden kann. Auch ist es von Bedeutung, Wartungsarbeiten an den Antrieben durchführen zu können, ohne die Achse aus dem Fahrzeug auszubauen.

Die EP 0 979 365 B1, die alle Merkmale des Oberbegriffes des unabhängigen Anspruchs 1 zeigt, offenbart ein Fahrzeuggetriebe mit integrierter, gekühlter Bremse, bei welchem der Abtriebsflansch direkt über Radlager im Gehäuse gelagert und über eine Verzahnung drehfest mit dem Planetenträger verbunden ist. An dem radial äußeren Bereich des Planetenträgers sind die inneren drehenden Lamellen einer Lamellenbremse angeordnet, über welche der Planetenträger mit dem drehfesten Gehäuse verbindbar ist. Somit besteht die Möglichkeit, die Bremse vor Verschmutzung zu schützen und den Abtrieb direkt zu bremsen. Der Planetenträger weist einen Zapfen auf, welcher in eine Bohrung des Abtriebsflansches ragt, wobei die drehfeste Verbindung zwischen dem Abtriebsflansch und dem Zapfen über eine Mitnahmeverzahnung erfolgt.

Die US 6,090,006 offenbart ein Fahrzeuggetriebe zum Antrieb der Fahrzeugräder, bei welchem der Abtriebsflansch direkt über zwei Radlager im Gehäuse gelagert ist und der Zapfen des Abtriebsflansches in einer Bohrung des Planetenträgers über eine Mitnahmeverzahnung drehfest gehalten ist. Am radial äußeren Bereich des Planetenträgers befinden sich die drehenden Lamellen einer Lamellenbremse, über welche der Planetenträger mit dem Gehäuse drehfest verbindbar ist. Eine Demontage des Abtriebsflansches ist hierbei sehr aufwendig.

Die EP 1 234 993 A1 offenbart ein Fahrzeuggetriebe zum Antrieb der Fahrzeugräder, bei welchem der Abtriebsflansch über einen Zentrierzapfen im Planetenträger und der Planetenträger über zwei Radlager im Gehäuse gelagert sind. Um den Abtriebsflansch mit dem Planetenträger drehfest zu verbinden, ist der Abtriebsflansch über axial angeordnete Schrauben mit dem Planetenträger verschraubt.

Die US 6,530,859 B2 offenbart ein Planetengetriebe, bei welchem ein Abtriebsflansch über eine Mitnahmeverzahnung mit einer Abtriebswelle drehfest verbunden ist und die Abtriebswelle über ein erstes Lager im Gehäuse und der Planetenträger über ein zweites Lager im Gehäuse gelagert sind und zwischen dem radial äußeren Bereich der Abtriebswelle und einer Bohrung im Planetenträger eine Zentrierbuchse angeordnet ist, welche den Planetenträger auf der Abtriebswelle zentriert. Unmittelbar benachbart zum inneren Zentralrad des Planetengetriebes ist eine Scheibe mit einem Verbindungselement angeordnet, über welches der Planetenträger mit der Abtriebswelle axial verbindbar ist. Eine Demontage der Abtriebswelle ist aufwendig.

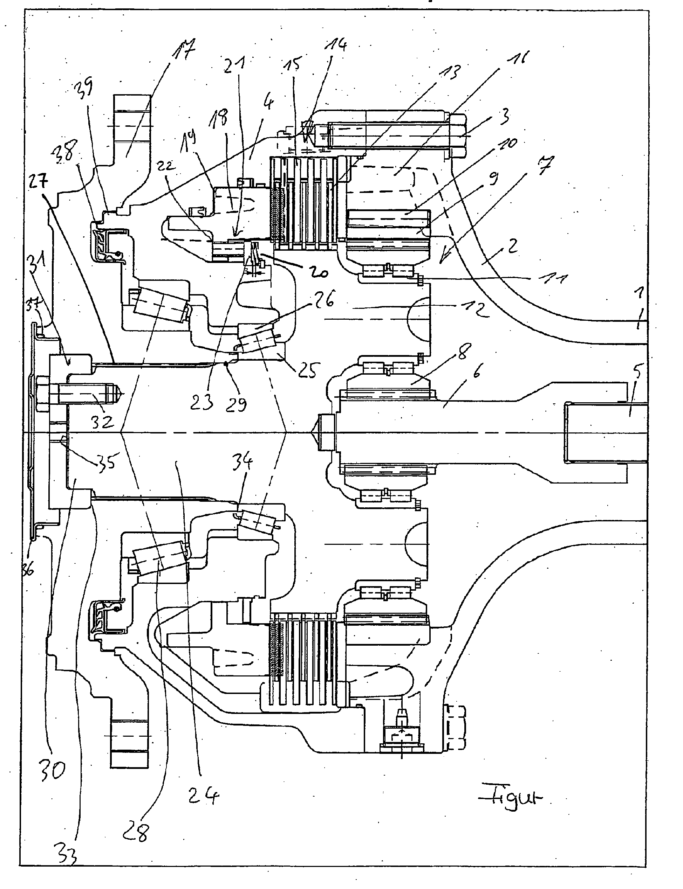

Die US 4,424,874 offenbart insbesondere in Fig. 4 einen Antrieb für ein Mobil-Fahrzeug, bei welchem eine Lamellenbremse zwischen dem inneren Zentralrad und dem drehfesten Gehäuse angeordnet und der Abtriebsflansch über eine Mitnahmeverzahnung drehfest mit dem Planetenträger verbunden sind, und der Abtriebsflansch über ein erstes Lager im Gehäuse und der Planetenträger über ein zweites Lager im Gehäuse gelagert sind, und der Abtriebsflansch über eine Mutter, welche dem inneren Zentralrad direkt benachbart angeordnet ist, in axialer Richtung mit dem Planetenträger verbunden wird. Bei dieser Anordnung ist die Demontage und Montage des Antriebs schwierig, da zur Einstellung der Radlager das Planetengetriebe demontiert sein muß.

Der vorliegenden Erfindung liegt die Aufgabe zugrunde, einen Antrieb für Mobil-Fahrzeuge zu schaffen, bei welchem der Abtrieb direkt über eine Lamellenbremse bremsbar ist, bei welchem die Radlager eine ausreichende Lebensdauer aufweisen und der Antrieb einfach demontierbar ist.

Die Aufgabe wird mit einem, auch die kennzeichnenden Merkmale des Hauptanspruchs aufweisenden, gattungsgemäßen Antrieb für Mobil-Fahrzeuge gelöst.

Erfindungsgemäß weist der Antrieb für Mobil-Fahrzeuge einen Abtriebsflansch auf, welcher über ein erstes Lager im Gehäuse gelagert ist. Der Planetenträger ist über ein zweites Lager ebenfalls im Gehäuse gelagert. Vorzugsweise sind das erste und das zweite Lager im gleichen Gehäuseteil angeordnet. Der Planetenträger weist einen in Richtung Abtriebsflansch weisenden Zapfen auf, welcher in eine Bohrung des Abtriebsflansches ragt, und über welchen der Abtriebsflansch mit dem Planetenträger drehfest verbunden ist. Somit ist es möglich, die Abtriebslager in ihren Dimensionen optimal auf die Erfordernisse auszulegen, wodurch beispielsweise das erste Lager größer dimensioniert ist als das zweite Lager. Der Innenring des zweiten Lagers stützt sich einerseits im Planetenträger und andererseits in axialer Richtung am Abtriebsflansch ab, wodurch der Innenring des zweiten Lagers in axialer Richtung durch den Abtriebsflansch und den Planetenträger fixiert ist. Durch diese Anordnung ist es möglich, eine einfache Montage zu gewährleisten, da ein aufwendiges Einstellen der beiden Radlager entfällt und eine sogenannte "Set-Right-Lagerung" verwendet werden kann. Ebenso besteht die Möglichkeit, den Abtriebsflansch auf einfache Weise zu demontieren, da bei Verwendung von Kegelrollenlagern als Radlager, welche in einer sogenannten "O-Anordnung" angeordnet sind, keine großen Abpreßkräfte für den Abtriebsflansch bei der Demontage benötigt werden. Unmittelbar benachbart zur zweiten Lagerung sind der Abtriebsflansch und der Zapfen des Planetenträgers so ausgebildet, dass der Abtriebsflansch auf dem Planetenträger in radialer Richtung zentriert ist. An dem, dem Abtriebsflansch zugewandten Ende des Zapfens des Planetenträgers sind der Abtriebsflansch und der Zapfen so ausgebildet, dass eine zweite Zentrierung des Abtriebsflansches auf dem Zapfen des Planetenträgers erfolgt. Vorzugsweise erfolgt diese Zentrierung über eine Zentrierbuchse, welche sich zwischen dem Zapfen und dem Abtriebsflansch befindet. In einer weiteren Ausgestaltungsform ist diese Zentrierbuchse topfförmig ausgebildet, wodurch der Abtriebsflansch auf dem Zapfen des Planetenträgers in axialer Richtung fixiert werden kann, indem die topfförmige Buchse über axiale Verbindungselemente, wie beispielsweise Schrauben, einerseits auf den Zapfen verspannt wird und andererseits sich in axialer Richtung im Abtriebsflansch abstützt. Indem der Abtriebsflansch über zwei beabstandete Zentrierungen auf dem Planetenträger in radialer Richtung zentriert wird, wird wirksam ein Abkippen des Planetenträgers im Abtriebsflansch verhindert, wodurch die Radlager optimale Betriebsbedingungen erhalten. Indem die axiale Fixierung des Planetenträgers im Abtriebsflansch an der dem Abtriebsflansch zugewandten Seite des Zapfens des Planetenträgers erfolgt, welcher auf einfache Weise von außen im Fahrzeug zugänglich ist, kann eine Demontage des Abtriebsflansches ohne Ausbau der Achse im Fahrzeug erfolgen. Auch wird zur Demontage des Abtriebsflansches keinerlei Sonderwerkzeug benötigt, da handelsübliche Schrauben verwendet werden.

Weitere Merkmale sind der Figuren-Beschreibung zu entnehmen.

Die einzige Figur zeigt einen Ausschnitt einer Seite der Antriebsachse mit einem Achsrohr 1, welches mit dem nicht gezeigten Fahrzeug verbindbar ist und welches eine trichterförmige Erweiterung 2 aufweist, welche über Verbindungselemente 3 mit dem Gehäuse 4 verbunden ist. Eine Antriebswelle 5 treibt ein inneres Zentralrad 6 eines Planetengetriebes 7 an und kann auch einstückig mit der Antriebswelle ausgeführt sein. Vorzugsweise ist die Antriebswelle mit einem nicht gezeigten Differential verbunden. Es besteht jedoch auch die Möglichkeit, die Antriebswelle mit einem Antriebsmotor, wie beispielsweise einem Elektromotor oder einem Hydromotor, zu verbinden. Das innere Zentralrad 6 ist mit dem Planetenrad 8 in Wirkverbindung, wobei sich das Planetenrad 8 am äußeren Zentralrad 9, welches drehfest gehalten ist, abstützt. Vorzugsweise ist das äußere Zentralrad 9 mittels Bolzen 10 drehfest in der trichterförmigen Erweiterung 2 oder dem Gehäuse 4 angeordnet. Es besteht jedoch auch die Möglichkeit, das äußere Zentralrad 9 über eine selbstschneidende Verzahnung, eine sogenannte "Maus-Verzahnung", drehfest in der trichterförmigen Erweiterung 2 oder dem Gehäuse 4 zu halten. Auch ist eine Anordnung des äußeren Zentralrades wie in der EP 0 979 365 B1 möglich. Das Planetenrad 8 ist über die Planetenlagerung 11 auf dem Planetenträger 12 gelagert. An dem radial äußeren Bereich des Planetenträgers 12, benachbart zum Planetenrad 8, sind die inneren drehenden Lamellen 13 der Lamellenbremse 14 drehfest angeordnet. Die äußeren Lamellen 15 sind drehfest im Gehäuse 4 oder der trichterförmigen Erweiterung 2 angeordnet. Indem die inneren Lamellen 13 drehen, erfolgt durch die Zentrifugalbeschleunigung des Schmiermittels eine Kühlung der Bremse 14, indem Schmiermittel am äußeren Bereich des Planetenträgers 12 bei den inneren Lamellen 13 eintritt, die Lamellenbremse durchflutet und in dem Bereich, in dem die äußeren Lamellen 15 drehfest gehalten sind, wieder aus der Lamellenbremse 14 in axialer Richtung austritt und über Kanäle 16 zurückfließen kann. Vorzugsweise ist die Lamellenbremse 14 zwischen dem Planetenrad 8 und dem Abtriebsflansch 17 angeordnet. Es besteht auch die Möglichkeit, die Lamellenbremse 14 in Richtung trichterförmiger Erweiterung anzuordnen. Zwischen der Lamellenbremse 14 und dem Abtriebsflansch 17 ist ein Kolben 18 angeordnet, welcher bei Druckbeaufschlagung im Raum 19 die Lamellenbremse 14 im Schließsinne betätigt. Der Kolben 18 wird von einer Rückstellfeder 20 bei Nichtbetätigen zurückgedrückt. Hierbei besteht die Möglichkeit, die Rückstellfeder 20 auf eine automatische Nachstellvorrichtung 21 wirken zu lassen, welche im radial inneren Bereich des Kolbens 18 angeordnet ist. Bei dieser Nachstellvorrichtung ist eine Klemmhülse 22 im Kolben 18 angeordnet, welche auf eine Scheibe 23 wirkt, welche innerhalb eines definierten Weges axial verschiebbar und durch beidseitige Anschläge der axiale Weg begrenzt ist. Da die automatische Nachstellvorrichtung 21 in radialer Richtung nicht fixiert ist, ist es auch nicht notwendig, den Kolben 18 in radialer Richtung zu fixieren. Vorzugsweise befindet sich der Kolben 18 und die Nachstellvorrichtung im Bereich des ersten und zweiten Lagers. Der Planetenträger 12 weist in Richtung des Abtriebsflansches 17 einen Zapfen 24 auf, auf dessen Oberfläche der Innenring 25 der zweiten Lagerung 26 angeordnet ist. Der Zapfen 24 ist über eine drehfeste Verbindung 27, beispielsweise eine Verzahnung oder eine mäanderförmige Ausgestaltung der Oberfläche oder mehrere Bolzen, mit dem Abtriebsflansch 17 drehfest verbunden. Diese drehfeste Verbindung 27 ist in einer Bohrung des Abtriebsflansches 17 angeordnet. Indem die drehfeste Verbindung 27 in der Bohrung des Abtriebsflansches 17 angeordnet ist, kann deren Länge, je nach Anforderung, optimal ausgelegt werden. Der Abtriebsflansch 17 ist über eine erste Lagerung 28 im Gehäuse 4 gelagert. Vorzugsweise ist die erste Lagerung 28 in ihrem Innendurchmesser größer als die zweite Lagerung 26 ausgestaltet. Unmittelbar benachbart zum Innenring 25 ist eine Zentrierung 29 angeordnet. Über diese Zentrierung 29 wird der Abtriebsflansch 17 auf dem Zapfen 24 zentriert. An der dem Planetenrad 8 abgewandten Ende 30 des Zapfens 24 befindet sich eine Buchse 31, welche den Abtriebsflansch 17 auf dem Zapfen 24 zentriert. Somit wird der Abtriebsflansch 17 über die Buchse 31 und die Zentrierung 29 auf dem Zapfen 24 zentriert, wodurch die erste Lagerung 28 und die zweite Lagerung 26 optimale Betriebsbedingungen erfahren, da der Abtriebsflansch 17 nicht gegen den Planetenträger 12 abkippen kann. Die Buchse 31 ist topfförmig ausgebildet und wird über Verbindungselemente 32 in Richtung des Zapfens 24 verspannt, wobei die Buchse 31 über ihre axiale Anlage 33 den Abtriebsflansch 17 auf den Innenring 25 drückt. Indem der Innenring 25 einerseits im Planetenträger 12 und andererseits an der axialen Anlage 34 des Abtriebsflansches 17 anliegt, ist eine einfache Montage ohne aufwendige Einstellungsarbeiten der ersten Lagerung 28 und der zweiten Lagerung 26 möglich. Es können somit sogenannte "Set-Right-Lagerungen" verwendet werden. Indem die Buchse 31 und die Verbindungselemente 32 auf einfache Weise von außen im Fahrzeug zugänglich sind, kann der Abtriebsflansch 17 ohne Ausbau der Achse aus dem Fahrzeug demontiert werden. Indem sich auf dem Abtriebsflansch 17 nur das erste Lager 28 befindet, kann der Abtriebsflansch 17 ohne größere Kraftaufwendung demontiert werden. Dies ist möglich, da der Innenring 25 auf dem Planetenträger 12 verbleibt. Die Buchse 31 ist über ein Abdrückgewinde 35 auf einfache Weise demontierbar. Zum Schutz der Verbindungselemente 32 und zur einfacheren Abdichtung ist der Abtriebsflansch 17 über einen Deckel 36 mit einer Dichtung 37 verschlossen. Der Abtriebsflansch 17 ist über einen Radialwellendichtring 38, eine sogenannte "Kassettendichtung", gegenüber dem Gehäuse 4 abgedichtet. Damit die Dichtung 38 vor Verschmutzung geschützt ist, sind der Abtriebsflansch 17 und das Gehäuse 4 so ausgestaltet, dass ein Labyrinth 39 entsteht.

### Bezugszeichen

- 1: Achsrohr
- 2: trichterförmige Erweiterung
- 3: Verbindungselemente
- 4: Gehäuse
- 5: Antriebswelle
- 6: inneres Zentralrad
- 7: Planetengetriebe
- 8: Planetenrad
- 9: äußeres Zentralrad
- 10: Bolzen
- 11: Lagerung
- 12: Planetenträger
- 13: innere Lamellen
- 14: Lamellenbremse
- 15: äußere Lamellen
- 16: Kanäle
- 17: Abtriebsflansch
- 18: Kolben
- 19: Raum
- 20: Rückstellfeder
- 21: automatische Nachstellvorrichtung
- 22: Klemmhülse
- 23: Scheibe
- 24: Zapfen
- 25: Innenring
- 26: zweite Lagerung
- 27: drehfeste Verbindung
- 28: erste Lagerung
- 29: Zentrierung
- 30: Ende
- 31: Buchse
- 32: Verbindungselement
- 33: axiale Anlage
- 34: axiale Anlage
- 35: Abdrückgewinde
- 36: Deckel
- 37: Dichtung
- 38: Dichtung
- 39: Labyrinth

## Patentansprüche

1. Antrieb für Mobil-Fahrzeuge mit einem Planetengetriebe (7), bei welchem ein inneres Zentralrad (6) den Antrieb bildet, ein äußeres Zentralrad (9) drehfest gehalten ist und ein Planetenträger (12), auf welchem mindestens ein Planetenrad (8) gelagert ist, den Abtrieb bildet, wobei zwischen einem drehfesten Gehäuse (4) und einem äußeren Bereich des Planetenträgers (12) Lamellen einer Lamellenbremse (14) angeordnet sind, wobei der Planetenträger (12) über einen Zapfen (24) drehfest mit einem Abtriebsflansch (17) verbunden ist und ein erstes Lager (28) und ein zweites Lager (26) beabstandet in dem Gehäuse (4) angeordnet sind, **dadurch gekennzeichnet, dass** der Abtriebsflansch (17) über das erste Lager (28) und der Planetenträger (12) über das zweite Lager (26) im Gehäuse (4) gelagert ist und das zweite Lager (26) durch den Abtriebsflansch (17) und den Planetenträger (12) in axialer Richtung fixiert ist.

2. Antrieb für ein Mobil-Fahrzeug nach Anspruch 1, **dadurch gekennzeichnet, dass**, benachbart zum zweiten Lager (26), der Abtriebsflansch (17) auf dem Zapfen (24) zentriert ist und im Bereich eines Endes (30) des Zapfens (24), welches auf der dem Planetenträger abgewandten Seite angeordnet ist, der Abtriebsflansch (17) über eine Buchse (31) auf dem Zapfen (24) zentriert ist.

3. Antrieb für ein Mobil-Fahrzeug nach Anspruch 1, **dadurch gekennzeichnet, dass** der Abtriebsflansch (17) eine Bohrung aufweist, welche den Zapfen (24) aufnimmt.

4. Antrieb für ein Mobil-Fahrzeug nach Anspruch 1, **dadurch gekennzeichnet, dass** der Zapfen (24) über eine Verzahnung mit dem Abtriebsflansch (17) drehfest verbunden ist.

5. Antrieb für ein Mobil-Fahrzeug nach Anspruch 2, **dadurch gekennzeichnet, dass** die Buchse (31) topfförmig ausgebildet ist und einerseits in axialer Richtung über Verbindungselemente (32) mit dem Zapfen (24) verbunden ist und andererseits in axialer Richtung am Abtriebsflansch (17) anliegt.

6. Antrieb für ein Mobil-Fahrzeug nach Anspruch 5, **dadurch gekennzeichnet, dass** die Verbindungselemente (32) einer Außenseite des Antriebs zugewandt angeordnet sind.

7. Antrieb für ein Mobil-Fahrzeug nach Anspruch 1, **dadurch gekennzeichnet, dass** das erste Lager (28) einen größeren Innendurchmesser als das zweite Lager (26) aufweist.

8. Antrieb für ein Mobil-Fahrzeug nach Anspruch 1, **dadurch gekennzeichnet, dass** im Bereich des ersten (28) und des zweiten Lagers (26) ein Kolben (18) angeordnet ist, über welchen die Lamellenbremse (14) im Schließsinne betätigbar ist.

9. Antrieb für ein Mobil-Fahrzeug nach Anspruch 8, **dadurch gekennzeichnet, dass** der Kolben (18) eine automatische Nachstellvorrichtung (21) aufweist.

10. Antrieb für ein Mobil-Fahrzeug nach Anspruch 1, **dadurch gekennzeichnet, dass** die Bremse (14) zwischen dem Abtriebsflansch (17) und dem Planetenrad (8) angeordnet ist.

## Claims

1. Drive for mobile vehicles with a planetary gear (7), in which an inner central gear (6) forms the drive, an outer central gear (9) is mounted so that it can not rotate and a planet carrier (12) on which at least one planet gear (8) is mounted forms the output, and discs of a disc brake (14) are disposed between a non-rotating housing (4) and an outer region of the planet carrier (12), and the planet carrier (12) is connected to an output flange (17) by means of a pin (24) so that it can not rotate and a first bearing (28) and a second bearing (26) are disposed in the housing (4) spaced apart, **characterised in that** the output flange (17) is mounted by means of the first bearing (28) and the planet carrier (12) is mounted by means of the second bearing (26) in the housing (4), and the second bearing (26) is fixed in the axial direction by means of the output flange (17) and the planet carrier (12).

2. Drive for a mobile vehicle as claimed in claim 1, **characterised in that**, adjacent to the second bearing (26), the output flange (17) is centred on the pin (24) and in the region of an end (30) of the pin (24) on the side remote from the planet carrier the output flange (17) is centred on the pin (24) by means of a bush (31).

3. Drive for a mobile vehicle as claimed in claim 1, **characterised in that** the output flange (17) has a bore which accommodates the pin (24).

4. Drive for a mobile vehicle as claimed in claim 1, **characterised in that** the pin (24) is connected to the output flange (17) by means of toothing so that it can not rotate.

5. Drive for a mobile vehicle as claimed in claim 2, **characterised in that** the bush (31) is of a pot-shaped design and is connected to the pin (24) in the axial direction by means of connecting elements (32) on the one hand and lies in contact with the output flange (17) in the axial direction on the other hand.

6. Drive for a mobile vehicle as claimed in claim 5, **characterised in that** the connecting elements (32) are disposed facing an external face of the drive.

7. Drive for a mobile vehicle as claimed in claim 1, **characterised in that** the first bearing (28) has a bigger internal diameter than the second bearing (26).

8. Drive for a mobile vehicle as claimed in claim 1, **characterised in that** a piston (18) is disposed in the region of the first (28) and the second bearing (26), by means of which the disc brake (14) can be activated in the closing direction.

9. Drive for a mobile vehicle as claimed in claim 8, **characterised in that** the piston (18) has an automatic adjusting mechanism (21).

10. Drive for a mobile vehicle as claimed in claim 1, **characterised in that** the brake (14) is disposed between the output flange (17) and the planet gear (8).

## Revendications

1. Système de transmission pour véhicules mobiles doté d'une boîte de vitesses épicycloïdale (7), dans laquelle un pignon central intérieur (6) forme le mécanisme d'entraînement (entrée), un pignon central extérieur (9) est maintenu solidaire en rotation et un arbre porte-satellites (12) - sur lequel est logé au moins un satellite (8) - forme la sortie, sachant que entre un carter (4) solidaire en rotation et une zone extérieure de l'arbre porte-satellites (12) sont disposés des disques d'un frein à disques multiples (14), sachant que l'arbre porte-satellites est lié, par l'intermédiaire d'un tourillon (24), celui-ci étant solidaire en rotation, à une bride de sortie (17) et qu'un premier palier (28) et un deuxième palier (26) sont disposés dans le carter (4) à une certaine distance l'un par rapport à l'autre, **caractérisé en ce que** la bride de sortie (17) est logée à l'aide du premier palier (28) et l'arbre porte-satellites est logé (12) à l'aide du deuxième palier (26) dans le carter (4), et que le deuxième palier (26) est fixé dans le sens axial à l'aide de la bride de sortie (17) et de l'arbre porte-satellites (12).

2. Système de transmission pour véhicules mobiles selon la revendication 1, **caractérisé en ce que** la bride de sortie (17), tout en étant juxtaposée au deuxième palier (26), est centrée sur le tourillon (24) et **en ce que** dans la zone d'une extrémité (30) du tourillon (24), étant disposée sur le côté opposé à l'arbre porte-satellites, la bride de sortie (17) est centrée sur le tourillon (24) par l'intermédiaire d'une douille (31).

3. Système de transmission pour véhicules mobiles selon la revendication 1, **caractérisé en ce que** la bride de sortie (17) comporte un alésage de logement du tourillon (24).

4. Système de transmission pour véhicules mobiles selon la revendication 1, **caractérisé en ce que** le tourillon (24) est lié de façon solidaire en rotation et par l'intermédiaire d'une denture à la bride de sortie (17).

5. Système de transmission pour véhicules mobiles selon la revendication 2, **caractérisé en ce que** la douille (31) est conçue en forme de pot et **en ce qu'**elle est liée d'une part dans le sens axial par l'intermédiaire d'éléments de fixation (32) au tourillon (24) et **en ce que** d'autre part elle adhère dans le sens axial à la bride de sortie (17).

6. Système de transmission pour véhicules mobiles selon la revendication 5, **caractérisé en ce que** les éléments de fixation (32) sont disposés de manière à être dirigés vers une face extérieure du mécanisme d'entraînement (entrée).

7. Système de transmission pour véhicules mobiles selon la revendication 1, **caractérisé en ce que** le diamètre intérieur du premier palier (28) est plus grand du diamètre intérieur du deuxième palier (26).

8. Système de transmission pour véhicules mobiles selon la revendication 1, **caractérisé en ce que** dans la zone du premier palier (28) et du deuxième palier (26) est disposé un piston (18), à l'aide duquel le frein à disques multiples (14) peut être fermé.

9. Système de transmission pour véhicules mobiles selon la revendication 8, **caractérisé en ce que** le piston (18) comporte un dispositif de rattrapage de jeu automatique (21).

10. Système de transmission pour véhicules mobiles selon la revendication 1, **caractérisé en ce que** le frein (14) est disposé entre la bride de sortie (17) et le satellite (8).
